# FASCICULE DE BREVET EUROPEEN

(11) **EP 0 979 212 B1**
(45) Date de publication et mention de la délivrance du brevet: **14.06.2006**
(21) Numéro de dépôt: 98913975.3
(22) Date de dépôt: 22.04.1998
(51) Int. Cl.: C02F 1/50

(54) **PRODUIT POUR LE TRAITEMENT BACTERICIDE DE FLUIDES**
PRODUKT ZUR BAKTERIZIDEN BEHANDLUNG VON FLUIDEN
PRODUCT FOR BACTERICIDAL TREATMENT OF FLUIDS

(30) Priorité: 22.04.1997 CH 93497; 23.09.1997 CH 224297
(43) Date de publication de la demande: 16.02.2000
(73) Titulaire: Gallion, Hervé, 69009 Lyon (FR); Boufendi, Laifa, 45100 Orléans (FR); Laure, Claude Charles André, 45240 Menestreau-en-Villette (FR)
(72) Inventeur: Gallion, Hervé, 69009 Lyon (FR); Boufendi, Laifa, 45100 Orléans (FR); Laure, Claude Charles André, 45240 Menestreau-en-Villette (FR)
(74) Mandataire: Bugnion Genève
(86) Numéro de dépôt international: PCT/IB1998/000610
(87) Numéro de publication internationale: WO 1998/047819

(56) Documents cités:
- WO-A-98/15337
- FR-A- 2 585 694
- US-A- 4 407 865
- PATENT ABSTRACTS OF JAPAN vol. 097, no. 008, 29 août 1997 & JP 09 108654 A (NISSHIN STEEL CO LTD;OSAKA GAS CO LTD), 28 avril 1997,

## Description

On connaît des produits de traitement bactéricide de l'eau constitués de charbon actif imprégné d'argent sous forme de sels obtenus par immersion du charbon dans une solution de nitrates d'argent.

Un tel produit comporte des inconvénients : relargage de nitrates et relargage d'argent. En effet, l'imprégnation ne permet pas d'obtenir un accrochage suffisant entre l'argent et le carbone et le relargage est inévitable.

L'utilisation de ce produit dans le domaine de l'eau potable est donc limité du fait que la concentration d'argent dissout est limitée à 0,01 ppm.

En laboratoire, il est connu de métalliser du charbon actif avec de l'argent métal, à chaud, dans une enceinte où un vide très poussé est effectué. Dans cette enceinte, l'argent est évaporé pour pouvoir pénétrer le charbon. Ce procédé permet une bonne diffusion de l'argent dans les pores du charbon mais le mauvais accrochage de l'argent avec le carbone entraîne un relargage d'argent dissout. La structure interne du charbon actif est totalement bouleversée et présente d'importantes pollutions. Ce produit obtenu est plus friable et s'use au passage de l'eau. Cette application ne permet pas d'obtenir un produit stable et la fabrication de ce produit est très difficile car le vide est long à obtenir, donc non industrialisable.

La présente invention a pour but de proposer un produit présentant un pouvoir bactéricide et bactériostatique après traitement beaucoup plus important que les produits connus et pratiquement exempt de toute pollution. Le pouvoir bactéricide dépendant de la surface utile du produit, celui-ci devant présenter une très grande surface active utilisable.

Le produit pour le traitement bactéricide selon l'invention est caractérisé en ce qu'il est constitué pratiquement exclusivement, d'une part, d'un support poreux de surface spécifique externe et interne déterminée en fonction des besoins et, d'autre part, d'un métal recouvrant ladite surface spécifique en couche mince d'épaisseur sensiblement uniforme de 5 à 10 Å sur toute la surface spécifique, ce métal étant lié au support poreux par des liaisons fortes de type liaisons covalentes.

Le métal étant très fortement lié au corps poreux, il ne risque pas de se détacher. Le produit est très pur.

Le support poreux peut être minéral ou organique, notamment synthétique. Il peut être constitué par exemple de charbon actif, de pierre ponce, de roche, de résine synthétique, etc.

Le produit présente une rémanence, c'est-à-dire un pouvoir de conservation, inhibant toute contamination ultérieure du fluide traité.

Le métal peut être par exemple de l'argent métal pur, ou du cuivre, du nickel ou tout autre métal ayant les effets recherchés.

Un tel produit est obtenu par injection du métal, en particulier de l'argent, sous forme atomique dans un corps poreux, par exemple de la poudre de charbon actif, immergée dans un plasma.

Deux exemples d'obtention d'un produit selon l'invention, constitué de charbon actif et d'argent, seront décrits ci-après.

### Exemple 1 :

Le charbon actif, sous forme de poudre, a été traité dans une décharge radiofréquences (13,56 MHz) à couplage capacitif dans un réacteur. La configuration a été choisie de façon à obtenir une tension d'auto-polarisation importante à travers la gaine de charges d'espace.

Le gaz utilisé dans le réacteur est de l'argon, un débit de 20 sccm correspondant à une pression de 1 Pa et la puissance électrique RF couplée au gaz est de 400 W. Ce couplage s'effectue à travers une boîte d'adaptation d'impédance de type L. Comme la gaine de charge d'espace a une largeur d'environ 1,5 cm environ, l'intensité du champ électrique dans la gaine est de 5,3 10⁴ Vm⁻¹. La densité du plasma dans ces conditions est estimée à 10⁻¹⁰ cm⁻³.

Les poudres de charbon actif sont immergées dans le plasma où elles sont par conséquent soumises à un bombardement continu de ions. Ce bombardement a pour effet de chauffer le charbon au sein même du plasma. Le flux d'ions arrivant à la surface des poudres de charbon est estimé à 7,3 10¹² ions . s⁻¹.

L'argent est injecté sous forme atomique dans la phase gazeuse. Le plasma a pour effet de créer des sites d'ancrage pour les atomes d'argent. Cet ancrage se traduit donc par des liaisons atomiques C-Ag fortes du type de liaisons covalentes. Ainsi, les agrégats d'argent observés par microscope électronique à balayage sont solidement liés au support de charbon et ne pourront pas être "relargués".

Les analyses physico-chimiques réalisées sur les poudres de charbon ainsi traitées montrent une proportion d'argent de 57% de la surface externe du charbon. Quant à la proportion d'argent qui diffuse dans le volume du charbon, à travers les pores des poudres, elle peut être modulée en agissant sur les paramètres physiques de la décharge. De plus, les analyses par fluorescence X révèlent un niveau de pollution très négligeable, sinon nul comparé à celui des poudres traitées par des voies d'imprégnation chimique. Ce résultat est dû au fait que les poudres de charbon sont soumis à un environnement gazeux contrôlé, dans l'exemple considéré un gaz inerte, servant uniquement de vecteur pour la métallisation. De ce fait toute pollution est réduite au maximum.

Il convient en outre de relever que ce procédé est intégré : il ne nécessite pas de post-traitement, par exemple thermique. Les poudres sont traitées une seule fois pendant une durée bien définie, par exemple 20 minutes.

### Exemple II :

De l'argon est injecté par la base du réacteur et pompage par le dessus du réacteur. Le charbon actif, vierge issu de noix de coco calcinées, et l'argent pur à N6 (c'est-à-dire présentant une pureté égale à 99,9999 %) sont placés sous forme de poudre dans un tambour rotatif permettant à ces poudres de baigner dans un plasma éloigné de la vanne de pompage. On créé un champ électrique d'intensité importante dans le réacteur pour assurer une lévitation des poudres dans le plasma. Dans ces conditions, la densité de plasma est d'environ 10⁻⁹ cm⁻³ et les températures électroniques et ioniques sont respectivement de 3 eV. et 0,03 eV.

Les granules de charbon actif sont immergées dans le plasma et, par conséquent, soumis à un bombardement continu d'ions d'argent. Ce bombardement a pour effet de porter la température du charbon à environ 900°C.

Les paramètres de travail sont les suivants :
Débit d'argon : env. 9 SCCM (cm⁻³ par minute)
Pression de travail : 2 Pa
Puissance d'excitation du plasma : 100 W
Tension d'autopolarisation : 1,2.10⁵ Vm⁻¹
Durée de dépôt : 25 mn
Epaisseur déposée : 5 à 10 A.

L'épaisseur déposée est donc nanométrique. Elle correspond à une densité interne d'Ag supérieure à 4 %.

## Revendications

1. Produit pour le traitement bactéricide de fluides, constitue d'un corps poreux revêtu d'une couche de métal recouvrant la surface spécifique interne et externe du corps poreux, **caractérisé en ce que** la couche est d'une épaisseur uniforme sur toute la surface spécifique de 5-10 Å, le métal étant lié au corps poreux par des liaisons de type liaisons covalentes.

2. Produit selon la revendication 1, **caractérisé en ce que** le métal est de l'argent métal pur (Ag⁰), ou du cuivre ou du nickel ou tout autre métal ayant des effets bactériostatiques et/ou bactéricides pour le traitement de fluides.

3. Produit selon la revendication 1 ou 2, **caractérisé en ce que** le corps poreux est constitué de charbon actif ou de pierre ponce ou de roche ou de résine synthétique.

4. Procédé d'obtention du produit selon l'une des revendications 1 à 3 consistant à déposer un métal en couche épaisseur de 5-10 Å sur un corps poreux par le traitement du corps poreux dans un réacteur à plasma froid par immersion du corps poreux dans un plasma de gaz inerte, **caractérisé en ce qu'**on injecte le métal sous forme atomique dans le plasma gazeux, ledit gaz inerte étant de l'Argon.

## Claims

1. A product for bactericidal treatment of fluids, constituted of a porous body coated with a metal layer covering the internal and external specific surface of the porous body, **characterised in that** the layer is of uniform thickness over the entire specific surface of 5-10 Å, the metal being bonded to the porous body by bonds of covalent-bond type.

2. The product according to claim 1, **characterised in that** the metal is pure metal silver (Ag⁰) or copper or nickel or any other metal having bacteriostatic and/or bactericidal effects for the treatment of fluids.

3. The product according to claim 1 or 2, **characterised in that** the porous body is constituted of active carbon or pumice stone or rock or synthetic resin.

4. A process for obtaining the product according one of claims 1 to 3, consisting in depositing a metal as a layer of 5-10 Å thickness on a porous body by treating the porous body in a cold-plasma reactor by immersing the porous body in an inert-gas plasma, **characterised in that** the metal is injected in atomic form into the gas plasma, said inert gas being Argon.

## Patentansprüche

1. Produkt zur bakteriziden Behandlung von Fluiden, bestehend aus einem porösen Körper, der mit einer Schicht eines Metalls überzogen ist, welche die innere und äussere spezifische Oberfläche des porösen Körpers bedeckt, **dadurch gekennzeichnet, dass** die Schicht auf der gesamten spezifischen Oberfläche eine gleichmässige Dicke von 5 bis 10 Å aufweist, wobei das Metall mit dem porösen Körper über Bindungen des Typus der kovalenten Bindungen gebunden ist.

2. Produkt nach Anspruch 1, **dadurch gekennzeichnet, dass** das Metall reines metallisches Silber (Ag⁰) ist, oder aber Kupfer oder Nickel oder ein beliebiges anderes Metall, welches bakteriostatische und/oder bakterizide Eigenschaften zur Behandlung von Fluiden aufweist.

3. Produkt nach Anspruch 1 oder 2, **dadurch gekennzeichnet, dass** der poröse Körper aus Aktivkohle, Bimsstein oder einem synthetischen Gestein oder Kunststoff besteht.

4. Verfahren zur Herstellung des Produktes nach einem der Ansprüche 1 bis 3, bei dem ein Metall in einer Schichtdicke von 5 bis 10 Å auf einen porösen Körper aufgebracht wird, indem der poröse Körper in einem Kaltplasmareaktor durch Einbringen des porösen Körpers in ein Plasma eines inerten Gases behandelt wird, **dadurch gekennzeichnet, dass** das Metall in Atomform in das gasförmige Plasma eingebracht wird, wobei das Inertgas Argon ist.
